# EUROPÄISCHE PATENTANMELDUNG

(11) **EP 1 764 186 A1**
(43) Veröffentlichungstag der Anmeldung: **21.03.2007**
(21) Anmeldenummer: 05108449.9
(22) Anmeldetag: 14.09.2005
(51) Int. Cl.: B23Q 17/09, G05B 19/4065

(54) **Bearbeitungsprozessüberwachungseinrichtung mit piezoelektrischen Axialkraftsensoren in der Arbeitsspindel**

(71) Anmelder: Kluft, Werner, D-52078 Aachen (DE)
(72) Erfinder: Kluft, Werner, D-52078 Aachen (DE)
(74) Vertreter: von Kreisler Selting Werner

(57) **Zusammenfassung**

Bei einer Prozessüberwachungseinrichtung für eine Werkzeugmaschine, insbesondere für Mehrspindelköpfe einer Werkzeugmaschine, mit mindestens einer Arbeitsspindel (2), die ein Werkzeug (3) antreibt, mit einem die Lagerung der Arbeitsspindel (2) gegen ein Spindelgehäuse (5) der Werkzeugmaschine vorspannenden Lagerdeckel (4), mit Sensoren (6) zur Messung von Parametern, die für den Werkzeugzustand repräsentativ sind, und mit einer Auswerteeinrichtung (8) zum Auswerten der Sensormesssignale der Sensoren (6) und zum Ausgeben eines Steuersignals für eine Alarmeinrichtung oder für die Werkzeugmaschine, wenn die Auswertung der gemessenen Parameter im Vergleich zu Sollwerten einen Werkzeugbruch, ein fehlendes Werkzeug oder einen zu hohen Werkzeugverschleiß ergeben, ist vorgesehen, dass auf einer axialen Fläche (12) des Lagerdeckels (4) oder einer zwischen dem Lagerdeckel (4) und einem äußeren Ring (16) des ersten Lagers (18) der Arbeitsspindel (2) angeordneten axialen Fläche (12) mindestens ein piezoelektrischer Sensor (6) angeordnet ist, der kraftschlüssig mit der axialen Fläche (12) verbunden ist und eine Kraftänderung in Axialrichtung der Arbeitsspindel (2) misst.

## Beschreibung

Die Erfindung betrifft eine Prozessüberwachungseinrichtung für eine Werkzeugmaschine, insbesondere für Mehrspindelköpfe einer Werkzeugmaschine, sowie ein Verfahren zur Prozessüberwachung nach dem Oberbegriff des Anspruchs 1 bzw. 9.

Bekannte Prozessüberwachungseinrichtungen für eine Werkzeugmaschine, insbesondere für solche mit Mehrspindelköpfen können mehrere Arbeitsspindeln gleichzeitig überwachen, wobei jede Arbeitsspindel ein Werkzeug antreibt. Die Lagerung der Arbeitsspindel ist mit Hilfe eines Lagerdeckels gegen ein Spindelgehäuse der Werkzeugmaschine vorgespannt.

Nach dem Stand der Technik ist es bereits bekannt, Abstandssensoren in dem Lagerdeckel vorzusehen, die gegen einen der Lagerung der Arbeitsspindel vorgelagerten Bund oder Passring gerichtet waren und in Relation zu diesem Passring eine Abstandsmessung vorgenommen haben, um auf die Arbeitsspindel einwirkende Vorschubkräfte und axiale Vibrationen zu messen.

Nachteilig ist dabei, dass die Ausrichtung des Abstandssensors auf den Passring an der Spindel schwierig ist und dass eine Nachrüstung einer solchen Prozessüberwachungseinrichtung häufig nicht möglich ist, weil ein derartiger Passring nicht vorhanden ist. Für das Nachrüsten eines zusätzlichen Rings fehlt in der Regel ein ausreichender Platz. Die bei dem Stand der Technik verwendeten Abstandssensoren sind induktive Sensoren.

Der Erfindung liegt die Aufgabe zugrunde, eine Prozessüberwachungseinrichtung sowie ein Verfahren zur Prozessüberwachung, insbesondere für eine Werkzeugmaschine mit Mehrspindelköpfen zu schaffen, mit denen Werkzeuge hinsichtlich Bruch, Fehlen oder Verschleiß überwacht werden können und die in einfacher Weise nachrüstbar sind.

Zur Lösung dieser Aufgabe dienen die Merkmale des Anspruchs 1 bzw. 9.

Die Erfindung sieht in vorteilhafter Weise vor, dass auf einer axialen Fläche des Lagerdeckels oder einer zwischen dem Lagerdeckel und einem äußeren Ring der Lagerung der Arbeitsspindel angeordneten axialen Fläche mindestens ein piezoelektrischer Sensor angeordnet ist, der kraftschlüssig mit der axialen Fläche verbunden ist, und eine Kraftänderung in Axialrichtung der Arbeitsspindel misst.

Eine derartige Prozessüberwachungseinrichtung benötigt keine zusätzlichen Elemente und kann in einfacher Weise nachgerüstet werden. Mit dem mindestens einem Sensor kann die Änderung der Axialkraft im Kraftnebenfluss gemessen werden. Im Betrieb wird die Lagerung der Arbeitsspindel in axialer Richtung belastet und damit der Lagerdeckel oder die zwischen dem Lagerdeckel und dem äußeren Ring der Lagerung der Arbeitsspindel angeordnete axiale Fläche in Axialrichtung hinsichtlich der Vorspannung entlastet, so dass der piezoelektrische Sensor diese Kraftänderungen messen kann.

Die im Normalbetrieb auftretenden Kräfte können im Teach-in-Verfahren, z.B. bei erstmaligem Einsatz eines neuen Werkzeuges oder bei einem Werkzeugwechsel eingelesen werden. Mit Hilfe der Auswerteeinrichtung und den vorgegebenen Sollwerten kann ein Werkzeugbruch, ein fehlendes Werkzeug oder Werkstück oder ein zu hoher Werkzeugverschleiß festgestellt werden.

Der piezoelektrische Sensor kann aus einer piezoelektrischen Quarzscheibe oder einer Keramikscheibe bestehen.

Vorzugsweise ist der piezoelektrische Sensor ein scheibenförmiger piezokeramischer Sensor. Der Vorteil eines derartigen piezokeramischen scheibenförmigen Sensors besteht darin, dass dieser aus amorphen Material besteht und ein in der Ebene nicht richtungsabhängiges Messsignal erzeugt. Außerdem sind derartige piezokeramische Scheiben preiswert und lassen sich platzsparend in den Lagerdeckel oder in eine andere zwischen dem Lagerdeckel und der Lagerung der Arbeitsspindel angeordnete axiale Fläche integrieren.

Vorzugsweise ist der mindestens eine Sensor in einer Aussparung in der axialen Fläche des Lagerdeckels oder eines zwischen Lagerdeckel und Arbeitsspindel angeordneten Rings angeordnet. Dies bedeutet, dass der Sensor die Messsignale allein durch die kraftschlüssige Verbindung zwischen dem Sensor und der axialen Fläche das Signal erzeugt und nicht zwischen zwei Flächen eingespannt werden muss.

Der Sensor wird mit Hilfe eines Klebers kraftschlüssig auf die axiale Fläche aufgeklebt.

Vorzugsweise sind mehrere mit Abstand voneinander angeordnete Sensoren vorgesehen. Dabei können die Messsignale aller Sensoren parallel geschaltet werden, um die Messsignale zu addieren und ein umfangsmäßig um die Achse der Arbeitsspindel aufsummiertes Messsignal zu erhalten.

Alternativ ist es möglich, insbesondere bei sich diametral gegenüberliegenden Sensoren eine Differenzbildung der Messsignale vorzunehmen, um dadurch auch auftretende Radialkräfte zu detektieren.

Die axiale Fläche, die die Sensoren trägt, ist dabei vorzugsweise dem Spindelgehäuse der Arbeitsspindel zugewandt.

Im Folgenden werden unter Bezugnahme auf die Zeichnungen Ausführungsbeispiele der Erfindung näher erläutert.

Es zeigen:

**Tabelle 1**

| | |
|---|---|
| Fig. 1 | eine Arbeitsspindel einer Werkzeugmaschine mit Mehrspindelkopf; |
| Fig. 2 | eine Draufsicht auf einen Lagerdeckel, |
| Fig.3 | eine perspektivische Ansicht eines Lagerdeckels, und |
| Fig. 4 | einen Lagerdeckel gemäß einem weiteren Ausführungsbeispiel. |

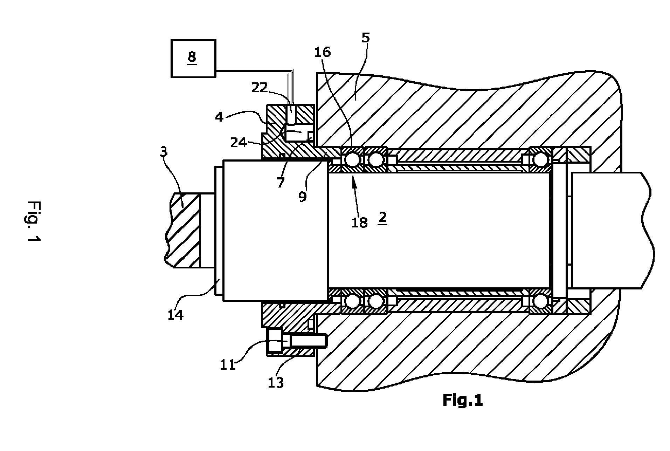

Fig. 1 zeigt eine Arbeitsspindel 2 einer Werkzeugmaschine und zwar eine Arbeitsspindel 2 für Mehrspindelköpfe, bei denen eine Vielzahl von Arbeitsspindeln dicht nebeneinander angeordnet sind. Die Arbeitsspindel 2 ist in einem Spindelgehäuse 5 gelagert wobei die Lagerung mit Hilfe eines Lagerdeckels 4 gegen das Spindelgehäuse 5 vorgespannt ist. Der Lagerdeckel 4 hat einen Ringbund 9, der in Richtung auf das Spindelgehäuse 5 vorsteht und der gegen einen äußeren Lagerring 16 eines ersten Lagers 18 anstößt.

Der Lagerdeckel 4 ist in dem Ausführungsbeispiel mit insgesamt sechs Befestigungsschrauben 11 in dem Spindelgehäuse 5 verschraubt, wozu der Lagerdeckel 4 entsprechende Bohrungen 13 aufweist. In der Nähe dieser Durchgangslöcher oder Bohrungen 13 sind Aussparungen 20 vorgesehen, deren Boden axiale Flächen 12 zur Aufnahme von Sensoren 6 bilden. Die Aussparungen 20 sind dem Spindelgehäuse 5 zugewandt.

Auf die Bodenflächen der Aussparungen 20, die die axialen Flächen 12 bilden, können scheibenförmige piezokeramische Sensoren 6 aufgeklebt werden, die auf diese Weise kraftschlüssig mit den axialen Flächen 12 verbunden werden. Die piezokeramischen Sensoren geben in Abhängigkeit der Kraftänderungen in Axialrichtung ein Messsignal ab, das einer Auswerteeinrichtung 8 zugeführt wird. Die Verkabelung der Sensoren 6 erfolgt mit Hilfe einer Ringnut 7, die alle Aussparungen 20 untereinander verbindet. Die Ringnut 7 ist an einer Stelle mit einem radial nach außen führenden Kanal 22, 24 verbunden, über den alle Signalleitungen der Sensoren 6 nach außen geführt werden können.

Die Sensoren 6 sowie die Ringnut 7 können in den Aussparungen 20 mit einer Vergussmasse abgedeckt werden, so dass kein Kühlschmiermittel eindringen kann. Bei diesem Ausführungsbeispiel sind demzufolge die Sensoren 6 nur mit der Bodenfläche der Aussparungen 20 verklebt und sind nicht zwischen zwei axialen Flächen eingespannt. Es versteht sich, dass bei einer anderen Ausführungsform die Sensoren auch zwischen zwei axialen Flächen eingebettet sein können.

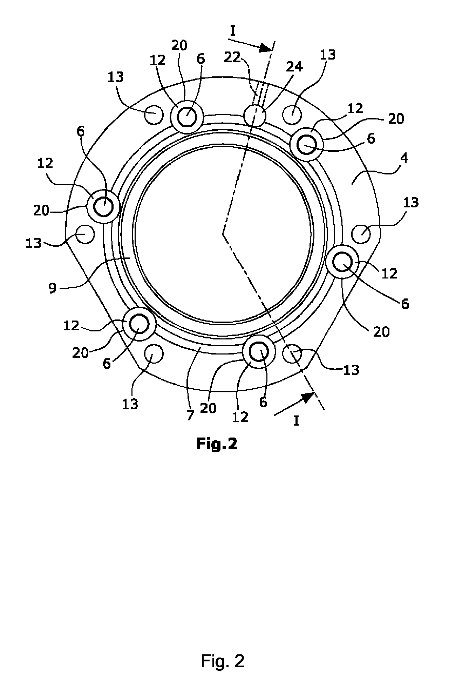

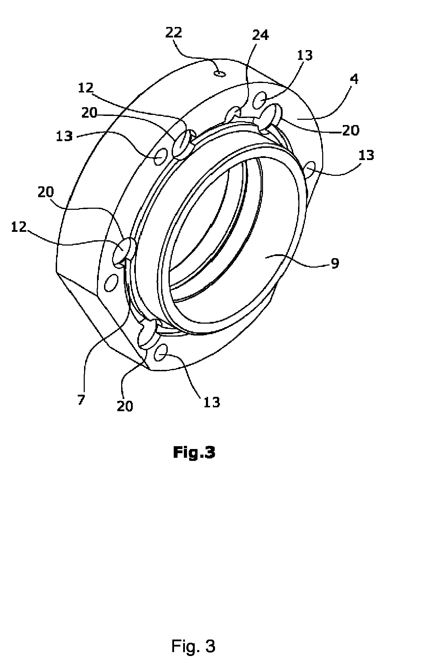

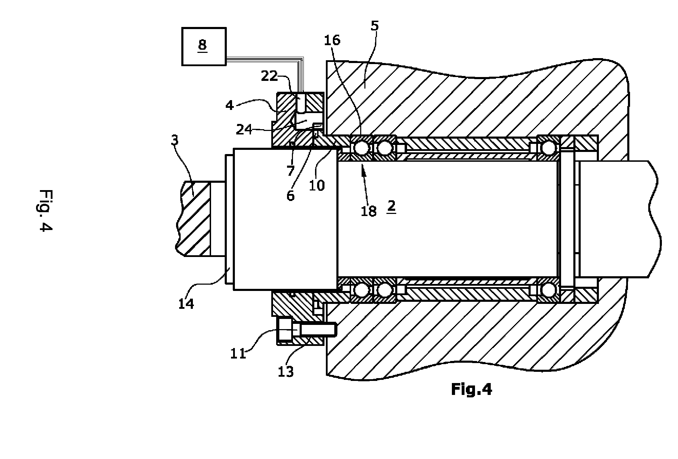

Der Lagerdeckel 4 kann auch wie in Fig. 4 gezeigt, zweiteilig ausgeführt sein, so dass ein separater Ring 10 in der Art eines Abstimmringes zusätzlich vorgesehen sein kann. In diesem Fall kann der Sensor 6 auf einer axialen Fläche des Ringes 10 vorzugsweise versenkt angeordnet sein. Wie aus Fig. 3 ersichtlich ist, muss der Lagerdeckel 4 nicht kreisförmig sein, sondern kann teilweise freigeschnitten sein, um einen geringeren Abstand zwischen zwei Arbeitsspindeln 2 zu ermöglichen.

Die beschriebene Prozessüberwachungseinrichtung hat den Vorteil, dass jedes Werkzeug einzeln hinsichtlich Verschleiß, Bruch oder dem Fehlen eines Werkzeuges oder Werkstückes überwacht werden kann. Die Überwachungseinrichtung ermöglicht es, eine beliebige Anzahl von Werkzeugen pro Spindel zu überwachen.

Die Sensoren sind intern angeordnet und durch den Lagerdeckel 4 geschützt. Bei der Nachrüstung der Prozessüberwachungseinrichtung ist keine Modifikation von Werkzeughaltern oder Arbeitsspindel 2 erforderlich. Bei jedem Stillstand der Maschine oder bei einem Werkstückwechsel, oder wenn das Werkzeug nicht im Eingriff mit dem Werkstück ist, kann das aktuelle Messsignal der Sensoren 6 auf einen Nullwert gesetzt werden, so dass ein eventuell bestehender Temperaturdrift oder ein sonstiger kapazitiver Drift stets kompensiert werden kann.

Ein Werkzeugbruch kann dadurch detektiert werden, dass ein zunächst anliegendes Messsignal vorzeitig ausfällt und nicht bis zu einem Schnittende des Werkzeugs vorhanden ist. Ein fehlendes Werkzeug oder ein fehlendes Werkstück kann durch das Nichtanliegen der Messsignale der Sensoren 6 detektiert werden. Ein zu hoher Werkzeugverschleiß kann durch Überlastschwellen der auftretenden Kräfte detektiert werden und auch durch Integration des Kraftsignals über die Zeit.

Wie bereits erwähnt, können die Schwellenwerte und Sollwerte mit Hilfe eines Teach-in-Verfahrens bei Einsatz eines frischen Werkzeuges eingelesen werden.

## Patentansprüche

1. Prozessüberwachungseinrichtung für eine Werkzeugmaschine, insbesondere für Mehrspindelköpfe einer Werkzeugmaschine, mit mindestens einer Arbeitsspindel (2), die ein Werkzeug (3) antreibt, mit einem die Lagerung der Arbeitsspindel (2) gegen ein Spindelgehäuse (5) der Werkzeugmaschine vorspannenden Lagerdeckel (4), mit Sensoren (6) zur Messung von Parametern, die für den Werkzeugzustand repräsentativ sind, und mit einer Auswerteeinrichtung (8) zum Auswerten der Sensormesssignale der Sensoren (6) und zum Ausgeben eines Steuersignals für eine Alarmeinrichtung oder für die Werkzeugmaschine, wenn die Auswertung der gemessenen Parameter im Vergleich zu Sollwerten einen Werkzeugbruch, ein fehlendes Werkzeug oder einen zu hohen Werkzeugverschleiß ergeben, **dadurch gekennzeichnet, dass** auf einer axialen Fläche (12) des Lagerdeckels (4) oder einer zwischen dem Lagerdeckel (4) und einem äußeren Ring (16) der Lagerung der Arbeitsspindel (2) angeordneten axialen Fläche (12) mindestens ein piezoelektrischer Sensor (6) angeordnet ist, der kraftschlüssig mit der axialen Fläche (12) verbunden ist und eine Kraftänderung in Axialrichtung der Arbeitsspindel (2) misst.

2. Prozessüberwachungseinrichtung in Anspruch 1, **dadurch gekennzeichnet, dass** der mindestens eine piezoelektrische Sensor (6) ein scheibenförmiger piezokeramischer Sensor ist.

3. Prozessüberwachungseinrichtung nach Anspruch 1 oder 2, **dadurch gekennzeichnet, dass** der mindestens eine Sensor (6) in einer Aussparung (20) in der axialen Fläche (12) des Lagerdeckels (4) oder eines zwischen Lagerdeckel (4) und dem äußeren Ring (16) der Lagerung der Arbeitsspindel (2) angeordneten Rings (10) sitzt.

4. Prozessüberwachungseinrichtung nach einem der Ansprüche 1 bis 3, **dadurch gekennzeichnet, dass** der mindestens ein Sensor (6) mit Hilfe eines Klebers kraftschlüssig mit der axialen Fläche (12) verbunden ist.

5. Prozessüberwachungseinrichtung nach einem der Ansprüche 1 bis 4, **dadurch gekennzeichnet, dass** mindestens zwei mit Abstand voneinander angeordnete Sensoren (6) vorgesehen sind.

6. Prozessüberwachungseinrichtung nach Anspruch 5, **dadurch gekennzeichnet, dass** die Messsignale aller Sensoren (6) parallel geschaltet sind.

7. Prozessüberwachungseinrichtung nach Anspruch 5 **dadurch gekennzeichnet, dass** eine Differenzbildung der Messsignale sich diametral gegenüberliegender Sensoren (6) zum Messen von Radialkräften erfolgt.

8. Prozessüberwachungseinrichtung nach einem der Ansprüche 1 bis 7, **dadurch gekennzeichnet, dass** die axiale Fläche (12) dem Spindelgehäuse (5) der Arbeitsspindel (2) zugewandt sind.

9. Verfahren zur Prozessüberwachung an Werkzeugmaschinen mit mindestens einer Arbeitsspindel (2) zum Antrieb eines Werkzeugs (3), wobei die äußeren Ringe der Lagerung der Arbeitsspindel (2) mit einem Lagerdeckel (4) gegen ein Spindelgehäuse (5) vorspannbar sind, insbesondere für erkzeugmaschinen mit Mehrspindelköpfen, durch Messen und Auswerten von Parametern, die für den Zustand des Werkzeuges repräsentativ sind, und durch Erzeugen eines Warnsignals oder eines Maschinenstoppbefehls, wenn die Auswertung der gemessenen Parameter im Vergleich zu Sollwerten einen Werkzeugbruch, ein fehlendes Werkzeug oder einen zu hohen Werkzeugverschleiß ergeben, **gekennzeichnet durch** das Messen von Axialkräften an axialen Flächen (12) in dem Lagerdeckel (4) oder an axialen Flächen (12) zwischen dem Lagerdeckel (4) und einem äußeren Ring (16) der Lagerung der Arbeitsspindel (2) unter Verwendung von mindestens einem piezoelektrischen Sensor (6), der kraftschlüssig mit der axialen Fläche (12) verbunden wird.

10. Verfahren nach Anspruch 9, **dadurch gekennzeichnet, dass** ein scheibenförmiger piezokeramischer Sensor (6) verwendet wird.

11. Verfahren nach Anspruch 9 oder 10, **dadurch gekennzeichnet, dass** der mindestens eine Sensor (6) mit der axialen Fläche (12) verklebt wird.

12. Verfahren nach einem der Ansprüche 9 bis 11, **dadurch gekennzeichnet, dass** die mindestens eine axiale Fläche (12) versenkt angeordnet wird.

13. Verfahren nach einem der Ansprüche 9 bis 12, **dadurch gekennzeichnet, dass** eine der Arbeitsspindel (2) zugewandte axiale Fläche des Lagerdeckels (4) verwendet wird.

14. Verfahren nach einem der Ansprüche 9 bis 13, **dadurch gekennzeichnet, dass** mehrere vorzugsweise diametral gegenüberliegend angeordnete Sensoren (6) verwendet werden.

15. Verfahren nach einem der Ansprüche 9 bis 14, **dadurch gekennzeichnet, dass** die Messsignale aller Sensoren (6) parallel geschaltet werden.

16. Verfahren nach einem der Ansprüche 9 bis 14, **dadurch gekennzeichnet, dass** die Messsignale diametral gegenüberliegender Sensoren zur Messung von Radialkräften voneinander subtrahiert werden.

17. Verfahren nach einem der Ansprüche 9 bis 16, **dadurch gekennzeichnet, dass** die aufgrund der axialen Belastung der Arbeitsspindel (2) bei Werkzeugeingriff erfolgende Entlastung der von dem Lagerdeckel (4) auf die äußeren Ringe (16) der Lagerung der Arbeitsspindel (2) aufgebrachten Axialkraft im Kraftnebenfluss durch die Sensoren (6) gemessen wird.

18. Verfahren nach einem der Ansprüche 9 bis 17, **dadurch gekennzeichnet, dass** bei jedem Stillstand der Maschine, oder jedes Mal, wenn das Werkzeug (3) außer Eingriff ist, die aktuellen Messsignale der Sensoren (6) auf einen Nullwert gesetzt werden.

19. Verfahren nach einem der Ansprüche 9 bis 18, **dadurch gekennzeichnet, dass** die Sollwerte der gemessenen Parameter bei erstmaligem Einsatz eines neuen Werkzeuges (3) durch ein Teach-in-Verfahren eingelesen werden.
